# EUROPÄISCHE PATENTSCHRIFT

(11) **EP 3 332 443 B1**
(45) Veröffentlichungstag und Bekanntmachung des Hinweises auf die Patenterteilung: **04.06.2025**
(21) Anmeldenummer: 16756605.8
(22) Anmeldetag: 03.08.2016
(51) Int. Cl.: B60L 50/60, B60L 58/21, H04Q 9/00, H01M 10/42, H01M 10/48, H04B 3/54

(54) **BATTERIESYSTEM, INSBESONDERE FÜR EIN KRAFTFAHRZEUG**
BATTERY SYSTEM, IN PARTICULAR FOR A MOTOR VEHICLE
SYSTÈME DE BATTERIE, EN PARTICULIER POUR UN VÉHICULE À MOTEUR

(30) Priorität: 07.08.2015 DE 102015010061
(43) Veröffentlichungstag der Anmeldung: 13.06.2018
(73) Patentinhaber: Marquardt GmbH, 78604 Rietheim-Weilheim (DE)
(72) Erfinder: RECKERMANN, Matthias, 78573 Wurmlingen (DE)
(74) Vertreter: Staeger & Sperling Partnerschaftsgesellschaft mbB
(86) Internationale Anmeldenummer: PCT/EP2016/068480
(87) Internationale Veröffentlichungsnummer: WO 2017/025393

(56) Entgegenhaltungen:
- DE-A1- 102010 011 277
- DE-A1- 102011 113 798
- DE-A1- 102012 208 444
- DE-A1- 102012 223 480
- US-A1- 2012 242 144

## Beschreibung

Die Erfindung betrifft eine Batterie und/oder einen Akkumulator nach dem Oberbegriff des Patentanspruchs 1.

Solche wiederaufladbaren Batterien bzw. Akkumulatoren werden für Kraftfahrzeuge, für Hybridfahrzeuge, für Pedelecs o. dgl. sowie auch für lokale Energiespeicher verwendet. Häufig sind diese Batterien mit einem sogenannten Batteriemanagementsystem zur Steuerung und/oder Überwachung von deren Funktionen versehen.

Eine derartige Batterie und/oder ein derartiger Akkumulator weisen wenigstens eine elektrische Zelle, also eine Batterie- und/oder Akkumulatorzelle auf. Die Batterie und/oder der Akkumulator besitzen einen elektrischen Anschluss für einen elektrischen Verbraucher und/oder einen elektrischen Generator. Weiter ist eine Versorgungsleitung zur elektrischen Verbindung der Zelle mit dem elektrischen Anschluss vorgesehen, wobei die Versorgungsleitung zum Transport der elektrischen Energie von und zur Zelle dient. Zur Erfassung der Batteriekenngrößen ist es notwendig, die elektrische Spannung jeder Zelle sehr genau zu messen. Des Weiteren kann optional auch eine Temperaturmessung vorgesehen sein.

Bei den heutigen Batteriesystemen wird jede Zelle mittels zwei Messleitungen an eine Kontrolleinheit angeschlossen. Des Weiteren können im Batteriesystem noch einige Messleitungen für die Temperatursensoren benötigt werden. Diese Messleitungen müssen im Batteriesystem entsprechend verlegt werden. Durch den Einsatz von solchen Leitungen, insbesondere einer Vielzahl von Leitungen, ist das Gesamtsystem störanfällig.

Aus der DE 10 2012 208 444 A1 ist weiter eine Batterie und/oder ein Akkumulator bekannt, wobei eine Kontrolleinheit zur Steuerung für die Zelle vorgesehen ist. Die Kontrolleinheit dient dabei zur Steuerung bzw. Regelung für das Laden und/oder Entladen der Zelle, um beispielsweise so die Zelle vor einer zerstörerischer Über- und/oder Unterspannung zu schützen. Die Kontrolleinheit steht wiederum mit der Versorgungsleitung in elektrischer Verbindung, wobei diese Verbindung zur entsprechenden Steuerung der Zelle dient. Bei der Batterie und/oder dem Akkumulator sind ein Sensor zur Messung der elektrischen Spannung der Zelle und/oder ein Sensor zur Messung der Temperatur der Zelle vorgesehen, wobei der Sensor an der Zelle angeordnet ist.

Weitere solche Batterien und/oder Akkumulatoren sind auch in der US 2012/242144 A1 sowie der DE 10 2011 113 798 A1 beschrieben.

Zudem werden in den Dokumenten DE 10 2010 011 277 A1 und DE 10 2012 223 480 A1 Batterien und/oder Akkumulatoren mit integrierten Sensoren vorgeschlagen, welche Teils über ein Bussystem ausgelesen werden.

Der Erfindung liegt die Aufgabe zugrunde, die Batterie und/oder den Akkumulator einfacher und/oder betriebssicherer auszugestalten.

Diese Aufgabe wird bei einer gattungsgemäßen Batterie und/oder einem gattungsgemäßen Akkumulator durch die kennzeichnenden Merkmale des Anspruchs 1 gelöst.

Die erfindungsgemäße Batterie und/oder der erfindungsgemäße Akkumulator zeichnen sich durch die in Anspruch 1 gefassten Merkmale aus. Der Sensor zur Messung der elektrischen Spannung der Zelle und/oder der Sensor zur Messung der Temperatur der Zelle sind/ist in der Zelle angeordnet. Diese Ausgestaltung ermöglicht vorteilhafterweise eine Messung der elektrischen Zellenspannung und/oder der Zellentemperatur direkt in der Batterie- und/oder Akkumulatorzelle, so dass eine diesbezügliche Verkabelung mittels elektrischer Leitungen nicht notwendig ist. Weitere Ausgestaltungen der Erfindung sind Gegenstand der Unteransprüche.

In einer vorteilhaften weiteren Ausgestaltung kann die Kontrolleinheit weitere Funktionen in der Art eines Batteriemanagementsystems bereitstellen, beispielsweise die Ladekontrolle, das Lastmanagement, die Bestimmung des Ladezustandes, die Bestimmung der Alterung der Zelle, das Ausbalancieren der Zellen untereinander o. dgl. Funktionen. Zweckmäßigerweise kann jeweils ein Sensor für jede Zelle vorgesehen sein.

Der vom Sensor erfasste Messwert für die elektrische Spannung der Zelle und/oder für die Temperatur der Zelle wird über die Versorgungsleitung zu der Kontrolleinheit übertragen. Vorteilhafterweise kann dann jegliche separate Messleitung und/oder Busleitung zur Batteriezelle entfallen, wodurch auch Kosteneinsparungen erzielbar sind. Zweckmäßigerweise erfolgt die Übertragung des Messwertes moduliert auf der Versorgungsleitung.

In einfacher Art und Weise kann der vom Sensor erfasste Messwert als analoger und/oder digitaler Wert zur Kontrolleinheit übertragen werden. Zum Schutz vor äußeren Einflüssen kann für die Batterie und/oder für den Akkumulator ein Gehäuse, das der Aufnahme der Zelle dient, vorgesehen sein. In kompakter Ausgestaltung kann die Kontrolleinheit im Gehäuse befindlich sein. Falls gewünscht kann die Kontrolleinheit auch extern in Bezug auf das Gehäuse angeordnet sein. Dies kann sich insbesondere dann anbieten, wenn die Kontrolleinheit für weitere Zwecke im Kraftfahrzeug Verwendung findet.

Die Erfindung stellt weiterhin ein Verfahren zum Betrieb einer erfindungsgemäßen Batterie und/oder eines erfindungsgemäßen Akkumulators, insbesondere für ein Kraftfahrzeug, bereit. Die Batterie und/oder der Akkumulator weisen mindestens eine elektrische Zelle, einen elektrischen Anschluss für einen elektrischen Verbraucher und/oder einen elektrischen Generator sowie eine Versorgungsleitung zur elektrischen Verbindung der Zelle mit dem elektrischen Anschluss auf, wobei der Messwert für die elektrische Spannung der Zelle und/oder für die Temperatur der Zelle von der Zelle zu einer Kontrolleinheit übertragen wird. Das erfindungsgemäße Verfahren zeichnet sich dadurch aus, dass die elektrische Spannung der Zelle und/oder die Temperatur der Zelle direkt in der Zelle gemessen werden.

In weiterer, funktionssicherer Ausgestaltung sowie in einfacher Art und Weise erfolgt die Übertragung des Messwerts mittels Modulation auf der Versorgungsleitung. Der Messwert kann dann in der Kontrolleinheit ausgewertet werden. Des Weiteren kann der Messwert zur Steuerung und/oder Regelung der Zelle durch die Kontrolleinheit verwendet werden.

Die Erfindung stellt weiterhin ein Verfahren zum Betrieb einer Batterie und/oder eines Akkumulators, insbesondere für ein Kraftfahrzeug, bereit. Die Batterie und/oder der Akkumulator weisen mindestens eine elektrische Zelle, einen elektrischen Anschluss für einen elektrischen Verbraucher und/oder einen elektrischen Generator sowie eine Versorgungsleitung zur elektrischen Verbindung der Zelle mit dem elektrischen Anschluss auf, wobei der Messwert für die elektrische Spannung der Zelle und/oder für die Temperatur der Zelle von der Zelle zu einer Kontrolleinheit übertragen wird. Das erfindungsgemäße Verfahren zeichnet sich dadurch aus, dass die elektrische Spannung der Zelle und/oder die Temperatur der Zelle direkt in der Zelle gemessen werden.

In weiterer, funktionssicherer Ausgestaltung sowie in einfacher Art und Weise kann die Übertragung des Messwerts mittels Modulation auf der Versorgungsleitung oder mittels eines Bussystems erfolgen. Der

Für eine besonders bevorzugte Ausgestaltung der erfindungsgemäßen Batterie und/oder des der erfindungsgemäßen Akkumulators ist nachfolgendes festzustellen.

Zur Erfassung der Batteriekenngrößen ist es notwendig, die Spannung jeder Zelle sehr genau zu messen. Des Weiteren kann optional auch eine Temperaturmessung der Zelle wünschenswert sein. Bei den bisherigen Systemen wird jede Zelle mit zwei Messleitungen an eine Kontrolleinheit angeschlossen und die Messung dann von der Kontrolleinheit vorgenommen. Des Weiteren werden im System noch einige Leitungen für die Temperatursensoren benötigt. Diese Leitungen müssen im Batterie- und/oder Akku-Pack entsprechend verlegt werden. Durch den Einsatz solcher Leitungen ist das Gesamtsystem störanfällig.

Die Messung der Zellspannungen und bei Bedarf auch der Zelltemperaturen erfolgen erfindungsgemäß direkt an der Zelle und/oder sogar in der Zelle. Die Übertragung der Messdaten erfolgt digital über ein Bussystem, wobei das Bussystem als ein Eindraht-Bus ausgebildet sein kann. Als Alternative kann die Übertragung der Messdaten moduliert direkt über die Versorgungsleitung erfolgen. Bei der Übertragung über die Versorgungsleitung kann jegliche Messleitung bzw. Busleitung entfallen.

Geschaffen ist mit Hilfe der Erfindung die Messung der Zellspannung und/oder der Zelltemperatur direkt an bzw. in der Zelle.

Die mit der Erfindung erzielten Vorteile bestehen insbesondere darin, dass die elektrische Spannung und/oder die Temperatur sehr genau gemessen werden können. Des Weiteren wird der Verdrahtungsaufwand für das Batteriesystem erheblich reduziert. Somit entstehen weniger Systemkosten und/oder eine höhere Performance für das Batteriesystem. Schließlich werden auch die Funktions- sowie die Betriebssicherheit für das Batteriesystem gesteigert.

Ausführungsbeispiele der Erfindung mit verschiedenen Weiterbildungen und Ausgestaltungen sind in den Zeichnungen dargestellt und werden im folgenden näher
beschrieben. Es zeigen
Fig. 1 ein Batteriesystem nach dem Stand der Technik,
Fig. 2 ein nicht erfindungsgemäßes Batteriesystem und
Fig. 3 ein Batteriesystem gemäß einer zweiten Ausführung.

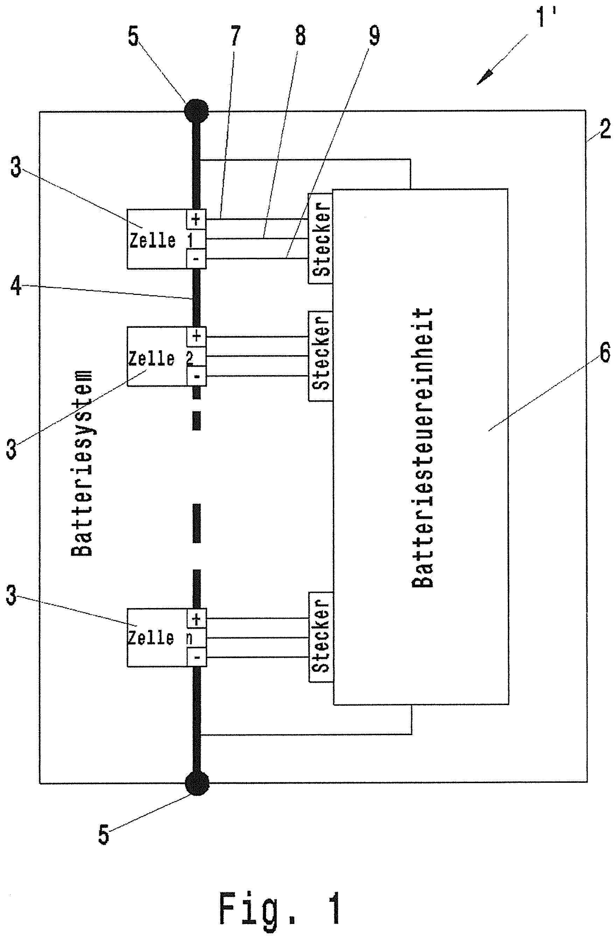

In Fig. 1 ist eine Batterie und/oder ein Akkumulator, nachfolgend als Batteriesystem l' bezeichnet, nach dem Stand der Technik zu sehen. Das Batteriesystem 1' besitzt ein Gehäuse 2, in dem mehrere elektrische Zellen 3, also Batterie- und/oder Akkuzellen, angeordnet sind. Die Zellen 3 sind mittels elektrischer Versorgungsleitungen 4 miteinander verbunden, derart, dass die von den Zellen 3 erzeugte elektrische Spannung an elektrischen Anschlüssen 5 am Gehäuse 2 zur Verfügung steht. An den elektrischen Anschlüssen 5 kann wiederum ein elektrischer Verbraucher angeschlossen sein, der mittels der im Batteriesystem l' gespeicherten elektrischen Energie betreibbar ist. Bei Betrieb des Verbrauchers wird das Batteriesystem 1' entsprechend entladen. Des Weiteren kann ein elektrischer Generator mit den Anschlüssen 5 verbunden sein, so dass das Batteriesystem l' mit elektrischer Energie aufgeladen werden kann. Selbstverständlich kann das Laden des Batteriesystems 1' auch in sonstiger Weise erfolgen, beispielsweise durch Anlegen einer von der Netzspannung bereitgestellten elektrischen Spannung an die Anschlüsse 5.

lm Gehäuse 2 befindet sich eine Kontrolleinheit 6 für das Batteriesystem l', die in der Art einer Batteriesteuereinheit bzw. eines Batteriemanagementsystems das Laden und/oder Entladen der Zellen 3 sowie gegebenenfalls weiterer Funktionen für die Zellen 3 steuert. Die Kontrolleinheit 6 steht hierfür mit der Versorgungsleitung 4 in elektrischer Verbindung. Jede Zelle 3 ist mittels zwei Messleitungen 7, 8 und einen zugehörigen Stecker an die Kontrolleinheit 6 angeschlossen, so dass die elektrische Spannung der Zelle 3 mittels eines entsprechenden Spannungssensors in der Kontrolleinheit 6 gemessen werden kann. Jeweils eine weitere Messleitung 9 führt von der Kontrolleinheit 6 zu einem mit der Zelle 3 in Verbindung stehenden Temperatursensor zur Messung der Temperatur der Batteriezelle 3. Diese Vielzahl von Messleitungen 7, 8, 9 muss im Gehäuse 2 entsprechend verlegt werden.

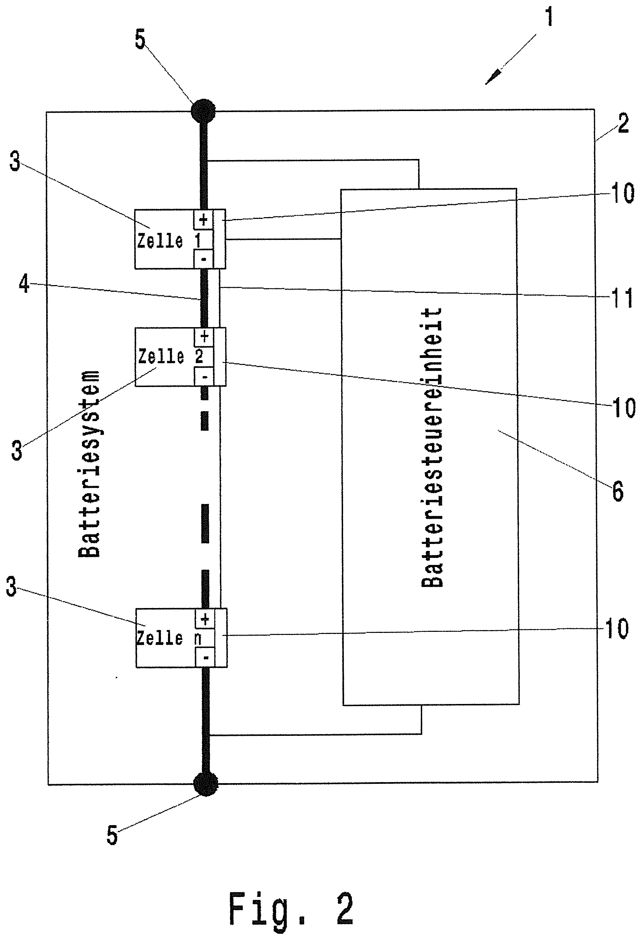

In Fig. 2 ist eine Batterie und/oder ein Akkumulator, nachfolgend als Batteriesystem 1 bezeichnet, gemäß einer ersten Ausführung der Erfindung zu sehen. Das Batteriesystem l, das insbesondere für ein Kraftfahrzeug geeignet ist, besitzt ein Gehäuse 2, in dem wenigstens eine elektrische Zelle 3 angeordnet ist. Des Weiteren ist im Gehäuse 2 wenigstens eine Versorgungsleitung 4 für die Zelle 3 angeordnet. Soweit mehrere Zellen 3 im Gehäuse 2 befindlich sind, sind diese Zellen 3 mittels der Versorgungsleitung 4 miteinander verbunden. Die elektrische Spannung des Batteriesystems 1 wird wiederum an elektrischen Anschlüssen 5 am Gehäuse 2 zur Verfügung gestellt, indem die Versorgungsleitung 4 die elektrische Verbindung der Zelle 3 mit dem elektrischen Anschluss 5 herstellt. In üblicher Weise kann wiederum ein elektrischer Verbraucher und/oder ein elektrischer Generator mit den Anschlüssen 5 verbunden sein und/oder eine sonstige Ladespannung an die Anschlüsse 5 angelegt werden. Schließlich befindet sich ebenfalls eine mit der Versorgungsleitung 4 in elektrischer Verbindung stehende Kontrolleinheit 6 in der Art einer Batteriesteuereinheit zur Steuerung für die Zellen 3 im Gehäuse 2.

An und/oder in der Zelle 3 ist ein Sensor l 0 angeordnet. Der Sensor 10 dient zur Messung der elektrischen Spannung der Zelle 3, also der Zellspannung, und/oder zur Messung der Temperatur der Zelle 3. Es ist dabei die jeweils zweckmäßige Anzahl von Sensoren 10 vorhanden, wobei jedoch in bevorzugter Weise jeweils ein Sensor 10 für jede Zelle 3 vorgesehen ist. Die Sensoren 10 und/oder die Zellen 3 sind mittels eines Bussystems 11 miteinander sowie mit der Kontrolleinheit 6 verbunden. Der vom jeweiligen Sensor 10 erfasste Messwert bezüglich der elektrischen Spannung und/oder der Temperatur der Zelle 3 wird über das Bussystem 11 zu der im Gehäuse 2 befindlichen Kontrolleinheit 6 für das Batteriesystem 1 übertragen. Das Bussystem 11 ist als ein Eindraht-Bus ausgebildet, so dass für das Bussystems 11 lediglich eine einzige Busleitung benötigt wird.

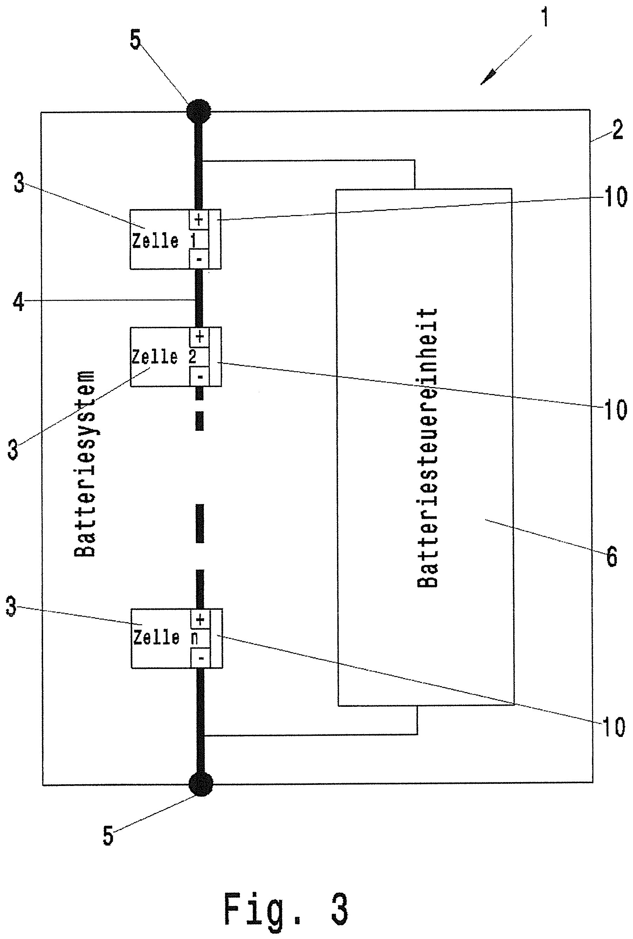

In Fig. 3 ist eine Batterie und/oder ein Akkumulator, nachfolgend als Batteriesystem 1 bezeichnet, gemäß einer zweiten Ausführung der Erfindung zu sehen. Das Batteriesystem 1 gemäß Fig. 3 ist im Wesentlichen wie jenes der Fig. 2 ausgestaltet. Allerdings sind die an und/oder in den Zellen 3 angeordneten Sensoren 10 nicht mittels eines Bussystems miteinander verbunden. Vielmehr wird der vom Sensor 10 erfasste Messwert für die elektrische Spannung und/oder für die Temperatur der Zelle 3 über die Versorgungsleitung 4 zu der im Gehäuse 2 befindlichen Kontrolleinheit 6 übertragen. Damit entfällt hierjegliche Messleitung beziehungsweise Busleitung. Die Übertragung des Messwertes erfolgt moduliert auf der Versorgungsleitung 4.

Wie in Fig. 2 oder Fig. 3 zu sehen ist, ist die Kontrolleinheit 6 im Gehäuse 2 des Batteriesystems l befindlich. Selbstverständlich kann falls gewünscht die Kontrolleinheit 6 auch extern in Bezug auf das Gehäuse 2 angeordnet sein. Des Weiteren kann je nach Zweckmäßigkeit der vom Sensor 10 erfasste Messwert als analoger und/oder digitaler Wert zur Kontrolleinheit 6 übertragen werden.

Das erfindungsgemäße Batteriesystem l zeichnet sich somit dadurch aus, dass die elektrische Spannung der Zelle 3 und/oder die Temperatur der Zelle 3 direkt an und/oder in der Zelle 3 gemessen werden. Der Messwert für die elektrische Spannung der Zelle 3 und/oder für die Temperatur der Zelle 3 wird von der Zelle 3 zu einer Kontrolleinheit 6, insbesondere mittels Modulation auf der Versorgungsleitung 4 oder mittels eines Bussystems 11. übertragen. Dieser Messwert wird dann in der Kontrolleinheit 6 ausgewertet. Anschließend wird der Messwert zur Steuerung der Zelle 3 durch die Kontrolleinheit 6 verwendet.

Die Erfindung ist nicht auf das beschriebene und dargestellte Ausführungsbeispiel beschränkt. Sie umfasst vielmehr auch alle fachmännischen Weiterbildungen im Rahmen der durch die Patentansprüche definierten Erfindung. So kann das erfindungsgemäße Batteriesystem 1 nicht nur für Kraftfahrzeuge Verwendung finden, sondern kann auch bei Elektrofahrrädern, Pedelecs o. dgl. eingesetzt werden. Auch ist der Einsatz für sonstige elektrische Geräte, die mit einer Batterie und/oder einem Akku arbeiten, beispielsweise für Akku-Elektrowerkzeuge, Akku-Gartengeräte o. dgl., in vorteilhafter Weise möglich.

### Bezugszeichen-Liste:

- 1:: Batteriesystem (nach der Erfindung)
- 1':: Batteriesystem (nach dem Stand der Technik)
- 2:: Gehäuse
- 3:: Zelle
- 4:: Versorgungsleitung
- 5:: (elektrischer) Anschluss
- 6:: Kontrolleinheit
- 7,8:: Messleitung (für Spannungsmessung bei Stand der Technik)
- 9:: Messleitung (für Temperaturmessung bei Stand der Technik)
- 10:: Sensor
- 11:: Bussystem

## Patentansprüche

1. Batterie und/oder Akkumulator für ein Kraftfahrzeug
mit einer Vielzahl elektrischer Zellen (3),
mit einem elektrischen Anschluss (5) für einen elektrischen Verbraucher und/oder einen elektrischen Generator,
mit einer Versorgungsleitung (4) zur elektrischen Verbindung der Zellen (3) mit dem elektrischen Anschluss (5),
mit einem Sensor (10) zur Messung der elektrischen Spannung der Zelle (3) und/oder einem Sensor (10) zur Messung der Temperatur der Zelle (3)
und mit einer Kontrolleinheit (6) zur Steuerung für das Laden und/oder Entladen der Zellen (3),
wobei die Kontrolleinheit (6) mit der Versorgungsleitung (4) zur Steuerung der Zellen (3) in elektrischer Verbindung steht und der Sensor (10) in der Zelle (3) angeordnet ist,
**dadurch gekennzeichnet, dass** der vom Sensor (10) erfasste Messwert für die elektrische Spannung und/oder für die Temperatur der Zelle (3) über die Versorgungsleitung (4) zu der Kontrolleinheit (6) übertragen wird,
wobei die Übertragung des Messwertes moduliert auf der Versorgungsleitung (4) erfolgt.

2. Batterie und/oder Akkumulator nach Anspruch 1, **dadurch gekennzeichnet, dass** jeweils ein Sensor (10) für jede Zelle (3) vorgesehen ist.

3. Batterie und/oder Akkumulator nach Anspruch 1 oder 2, **dadurch gekennzeichnet, dass** der vom Sensor (10) erfasste Messwert als analoger und/oder digitaler Wert zur Kontrolleinheit (6) übertragen wird.

4. Batterie und/oder Akkumulator nach einem der Ansprüche 1 bis 3, **dadurch gekennzeichnet, dass** ein Gehäuse (2) zur Aufnahme der Zelle (3) vorgesehen ist.

5. Batterie und/oder Akkumulator nach Anspruch 4, **dadurch gekennzeichnet, dass** die Kontrolleinheit (6) im Gehäuse (2) befindlich ist.

6. Batterie und/oder Akkumulator nach Anspruch 4, **dadurch gekennzeichnet, dass** die Kontrolleinheit (6) extern in Bezug auf das Gehäuse (2) angeordnet ist.

7. Verfahren zum Betrieb einer Batterie und/oder eines Akkumulators für ein Kraftfahrzeug gemäß einem der vorhergehenden Ansprüche, wobei die Batterie und/oder der Akkumulator einen elektrischen Anschluss (5) für einen elektrischen Verbraucher und/oder einen elektrischen Generator sowie eine Versorgungsleitung (4) zur elektrischen Verbindung der Zelle (3) mit dem elektrischen Anschluss (5) aufweist, wobei die elektrische Spannung der Zelle (3) und/oder die Temperatur der Zelle (3) gemessen wird, und wobei der Messwert für die elektrische Spannung der Zelle (3) und/oder für die Temperatur der Zelle (3) von der Zelle (3) zu einer Kontrolleinheit (6) übertragen wird, **dadurch gekennzeichnet, dass** der Messwert direkt in der Zelle (3) gemessen und der Messwert mittels Modulation auf der Versorgungsleitung übertragen wird.

8. Verfahren zum Betrieb der Batterie und/oder des Akkumulators nach Anspruch 7, **dadurch gekennzeichnet, dass** der Messwert mittels eines Bussystems (11) übertragen wird.

9. Verfahren zum Betrieb der Batterie und/oder des Akkumulators nach Anspruch 7 oder 8, **dadurch gekennzeichnet, dass** der Messwert in der Kontrolleinheit (6) ausgewertet wird, und dass der Messwert zur Steuerung der Zelle (3) durch die Kontrolleinheit (6) verwendet wird.

## Claims

1. A battery and/or accumulator for a motor vehicle with a plurality of electrical cells (3),
with an electrical terminal (5) for an electrical consumer and/or an electrical generator,
with a supply line (4) for electrically connecting the cells (3) to the electrical terminal (5),
with a sensor (10) for measuring the electrical voltage of the cell (3) and/or a sensor (10) for measuring the temperature of the cell (3),
and with a control unit (6) for controlling the charging and/or discharging of the cells (3), wherein the control unit (6) is electrically connected to the supply line (4) for the purpose of controlling the cells (3), and the sensor (10) is arranged in the cell (3),
**characterized in that** the measured value for the electrical voltage and/or for the temperature of the cell (3) detected by the sensor (10) is transmitted to the control unit (6) via the supply line (4),
the transmission of the measured value occurring in modulated form on the supply line (4).

2. The battery and/or accumulator according to claim 1, **characterized in that** one sensor (10) is provided for each cell (3).

3. The battery and/or accumulator according to claim 1 or 2, **characterized in that** the measured value detected by the sensor (10) is transmitted to the control unit (6) as an analog and/or digital value.

4. The battery and/or accumulator according to any one of claims 1 to 3, **characterized in that** a housing (2) for receiving the cell (3) is provided.

5. The battery and/or accumulator according to claim 4, **characterized in that** the control unit (6) is located in the housing (2).

6. The battery and/or accumulator according to claim 4, **characterized in that** the control unit (6) is arranged externally with respect to the housing (2).

7. A method for operating a battery and/or an accumulator for a motor vehicle according to any one of the preceding claims,
wherein the battery and/or the accumulator has an electrical terminal (5) for an electrical consumer and/or an electrical generator and a supply line (4) for electrically connecting the cell (3) to the electrical terminal (5), wherein the electrical voltage of the cell (3) and/or the temperature of the cell (3) is measured, and wherein the measured value for the electrical voltage of the cell (3) and/or for the temperature of the cell (3) is transmitted from the cell (3) to a control unit (6), **characterized in that** the measured value is measured directly in the cell (3) and the measured value is transmitted by means of modulation on the supply line.

8. The method for operating the battery and/or the accumulator according to claim 7, **characterized in that** the measured value is transmitted by means of a bus system (11).

9. The method for operating the battery and/or the accumulator according to claim 7 or 8, **characterized in that** the measured value is evaluated in the control unit (6) and that the measured value is used by the control unit (6) to control the cell (3).

## Revendications

1. Batterie et/ou accumulateur pour un véhicule automobile, comprenant
une pluralité de cellules électriques (3),
une borne électrique (5) pour un consommateur électrique et/ou un générateur électrique,
une ligne d'alimentation pour la liaison électrique des cellules (3) à la borne électrique (5),
un capteur (10) pour mesurer la tension électrique de la cellule (3) et/ou un capteur (10) pour mesurer la température de la cellule (3),
et une unité de contrôle (6) pour commander la charge et/ou la décharge des cellules (3),
dans lesquels l'unité de contrôle (6) est en liaison électrique avec la ligne d'alimentation (4) pour commander les cellules (3), et le capteur (10) est disposé dans la cellule (3),
**caractérisés en ce que** la valeur de mesure détectée par le capteur (10) pour la tension électrique et/ou pour la température de la cellule (3) est transmise à l'unité de contrôle (6) par l'intermédiaire de la ligne d'alimentation,
dans lesquels la transmission de la valeur de mesure est effectuée de manière modulée sur la ligne d'alimentation (4).

2. Batterie et/ou accumulateur selon la revendication 1, **caractérisés en ce que** respectivement un capteur (10) est prévu pour chaque cellule (3).

3. Batterie et/ou accumulateur selon la revendication 1 ou 2, **caractérisés en ce que** la valeur de mesure détectée par le capteur (10) est transmise à l'unité de contrôle (6) sous forme de valeur analogique et/ou numérique.

4. Batterie et/ou accumulateur selon l'une quelconque des revendications 1 à 3, **caractérisés en ce qu'**un boîtier (2) est prévu pour recevoir la cellule (3).

5. Batterie et/ou accumulateur selon la revendication 4, **caractérisés en ce que** l'unité de contrôle (6) se trouve dans le boîtier (2).

6. Batterie et/ou accumulateur selon la revendication 4, **caractérisés en ce que** l'unité de contrôle (6) est disposée à l'extérieur par rapport au boîtier (2).

7. Procédé permettant de faire fonctionner une batterie et/ou un accumulateur pour un véhicule automobile selon l'une quelconque des revendications précédentes,
dans lequel la batterie et/ou l'accumulateur présentent une borne électrique (5) pour un consommateur électrique et/ou un générateur électrique ainsi qu'une ligne d'alimentation (4) pour la liaison électrique de la cellule (3) à la borne électrique (5), dans lequel la tension électrique de la cellule (3) et/ou la température de la cellule (3) sont mesurées, et dans lequel la valeur de mesure pour la tension électrique de la cellule (3) et/ou pour la température de la cellule (3) est transmise de la cellule (3) à une unité de contrôle (6), **caractérisé en ce que** la valeur de mesure est mesurée directement dans la cellule (3), et la valeur de mesure est transmise au moyen d'une modulation sur la ligne d'alimentation.

8. Procédé permettant de faire fonctionner la batterie et/ou l'accumulateur selon la revendication 7, **caractérisé en ce que** la valeur de mesure est transmise au moyen d'un système de bus (11).

9. Procédé permettant de faire fonctionner la batterie et/ou l'accumulateur selon la revendication 7 ou 8, **caractérisé en ce que** la valeur de mesure dans l'unité de contrôle (6) est évaluée, et **en ce que** la valeur de mesure pour commander la cellule (3) est utilisée par l'unité de contrôle (6).
